(19) **Europäisches Patentamt / European Patent Office / Office européen des brevets**

(11) **EP 3 611 201 B1**

(12) # EUROPEAN PATENT SPECIFICATION

(45) Date of publication and mention of the grant of the patent:
**19.07.2023 Bulletin 2023/29**

(21) Application number: **18783930.3**

(22) Date of filing: **11.04.2018**

(51) International Patent Classification (IPC):
*C08K 3/013* (2018.01)    *C08K 3/22* (2006.01)
*C08K 3/26* (2006.01)    *C08K 3/30* (2006.01)
*C08K 3/34* (2006.01)    *C08K 7/02* (2006.01)
*C08K 7/04* (2006.01)    *C08K 7/06* (2006.01)
*C08K 7/14* (2006.01)    *C08L 79/08* (2006.01)
*C08F 2/44* (2006.01)    *C08F 299/02* (2006.01)
*B29C 43/00* (2006.01)    *B29C 43/52* (2006.01)
*B29K 105/00* (2006.01)    *B29K 509/00* (2006.01)
*B29K 105/16* (2006.01)    *B29L 31/30* (2006.01)

(52) Cooperative Patent Classification (CPC):
(C-Sets available)
**B29C 43/003; C08F 2/44; C08F 299/02;
C08K 3/013; C08K 3/22; C08K 3/26; C08K 3/30;
C08K 3/34; C08K 7/02; C08K 7/04; C08K 7/06;
C08K 7/14; C08L 79/08;** B29C 43/52;
B29K 2105/0005;       (Cont.)

(86) International application number:
**PCT/JP2018/015222**

(87) International publication number:
**WO 2018/190370 (18.10.2018 Gazette 2018/42)**

(54) **COMPOSITION HAVING HIGH FILLER CONTENT AND METHOD FOR PRODUCING MOLDED ARTICLE**

ZUSAMMENSETZUNG MIT HOHEM FÜLLSTOFFGEHALT UND VERFAHREN ZUR HERSTELLUNG VON FORMKÖRPERN

COMPOSITION PRÉSENTANT UNE GRANDE TENEUR EN CHARGE ET PROCÉDÉ DE PRODUCTION D'UN ARTICLE MOULÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2017 JP 2017078916**

(43) Date of publication of application:
**19.02.2020 Bulletin 2020/08**

(73) Proprietor: **Toyo Seikan Group Holdings, Ltd.
Shinagawa-ku
Tokyo 141-8627 (JP)**

(72) Inventors:
• **ENOKIDO, Toshinori
Yokohama-shi
Kanagawa 240-0062 (JP)**
• **WATANABE, Kazunobu
Yokohama-shi
Kanagawa 240-0062 (JP)**
• **SEGAMI, Kouta
Yokohama-shi
Kanagawa 240-0062 (JP)**
• **KOBAYASHI, Yusuke
Yokohama-shi
Kanagawa 240-0062 (JP)**

**(Cont. next page)**

(74) Representative: **J A Kemp LLP**
**80 Turnmill Street**
**London EC1M 5QU (GB)**

(56) References cited:
**EP-A2- 1 029 893**     **WO-A1-2009/123042**
**WO-A1-2016/039485**   **WO-A1-2016/039485**
**JP-A- S5 989 824**      **JP-A- H02 289 648**
**JP-A- 2000 234 055**

(52) Cooperative Patent Classification (CPC): (Cont.)
B29K 2105/16; B29K 2509/00; B29L 2031/30;
C08K 2003/222; C08K 2003/265; C08K 2003/3045;
C08K 2201/003; C08K 2201/004

C-Sets
**C08K 3/013, C08L 79/08;**
**C08K 3/22, C08L 79/08;**
**C08K 3/26, C08L 79/08;**
**C08K 3/30, C08L 79/08;**
**C08K 3/34, C08L 79/08;**
**C08K 7/02, C08L 79/08;**
**C08K 7/04, C08L 79/08;**
**C08K 7/06, C08L 79/08;**
**C08K 7/14, C08L 79/08**

**Description**

Technical Field:

The present invention relates to a fiber-reinforced polyimide resin composition. More specifically, the present invention relates to a composition with a high content of filler, which is economically efficient since the use amount of polyimide resin is decreased, and which can be shaped easily as a molded article. The present invention further relates to a method for producing a molded article that is excellent in tribological performance and that is obtained using this composition.

Background Art:

Molded articles comprising a fiber-reinforced resin obtained by blending a functional fiber like a carbon fiber in a resin have some excellent properties such as weather resistance, mechanical strength and durability, and thus, the molded articles are widely used for transportation equipment such as automobiles and airplanes, civil engineering and construction materials, and sporting goods.

For instance, Patent document 1 proposes a friction material comprising a resin composition for friction material, which includes a specific aromatic polyimide oligomer as a binder for a carbon fiber. In this friction material, the binder exhibits excellent heat resistance and mechanical performance and also favorable moldability in comparison with a case of phenol resin that is used preferably as a conventional binder for a friction material.

Further, Patent document 2 proposes a rolling element comprising a carbon fiber-reinforced resin containing 10 to 70% by weight of carbon fiber having a specific thermal conductivity.

When the fiber-reinforced resin molded article is used as a sliding member like a bearing, the article is required to have high mechanical strength like stiffness, smaller dynamic friction coefficient, a higher wear resistance, and furthermore, a higher limiting PV value. In conclusion, it is desired to use as a matrix resin an addition-reaction type polyimide resin excellent in mechanical strength, heat resistance and durability, and also in an impregnation property.

Patent document 3 proposes an addition-reaction type polyimide resin, more specifically, a highly-functional addition-reaction type polyimide resin that can be used for producing a carbon fiber-reinforced resin through resin transfer molding (RTM) and resin injection (RI).

When the addition-reaction type polyimide resin is used for the aforementioned matrix resin of the fiber-reinforced resin molded article, the heat resistance, durability and mechanical strength can be improved. However, the thus molded article may be warped, and thus, it cannot be actually used as a sliding member.

In order to solve the problem, the present inventors proposed in Patent documents 4 and 5 a method for producing a fiber-reinforced resin molded article free of warpage and deformation. This is obtained by increasing the melting viscosity of the prepolymer of the addition-reaction type polyimide resin so as to homogeneously disperse the functional fiber in the addition-reaction type polyimide resin without sedimentation or uneven distribution of the functional fiber.

Prior Art Documents:

Patent Documents:

Patent Document 1: JP 2009-242656 (A)
Patent Document 2: JP 2011-127636 (A)
Patent Document 3: JP 2003-526704 (A)
Patent Document 4: JP 2016-60914 (A)
Patent Document 5: JP 2016-60915 (A)

WO2016/039485A1 discloses compositions for molded articles with sliding properties. The compositions comprise addition-reaction type polyimide and functional fibers.

EP1029893A2 provides compositions for fuelcell separators and sealing materials comprising epoxy resins, addition-reation type polyimides, graphite or carbon blacks as filler and carbon fibers.

JP2000234055 teaches the use of addition-type polyimide based compositions for molded articles with high electro-conductivity. Further additives used are electro-conductive fillers (eg. graphite) and glass fibers or carbon fibers.

Summary of the Invention:

Problems to be solved by the invention:

The fiber-reinforced resin molded article formed by the aforementioned method comprises a matrix resin of an addition-reaction type polyimide resin excellent in heat resistance, durability and mechanical strength. The resin is crosslinked and cured with the functional fiber uniformly dispersed therein to form the article that can be used preferably as a sliding member without any substantial distortion like warpage.

On the other hand, since the addition-reaction type polyimide resin is an extremely expensive resin, it may be desirable to decrease the use amount of the addition-reaction type polyimide resin for lowering the cost. However, the moldability may deteriorate when the filler content is increased to decrease the use amount of the addition-reaction type polyimide resin. As a result, there is a necessity of molding at a high pressure, and this may apply greater load on the equipment and increase the energy cost, and thus, sufficient improvement in the economy may be inhibited. Further, when a great amount of filler such as carbon fiber, polytetrafluoroethylene (PTFE), or graphite is added, resin impregnation failure may occur to degrade the strength and hardness of the molded article, thereby impairing the performance of the fiber-reinforced resin molded article.

The friction material described in Patent document 1 comprises a functional fiber and an inorganic filler blended in an addition-reaction type polyimide resin. However, the functional fiber may be distributed ununiformly, and furthermore, there is a difficulty in forming a molded article exhibiting uniform performance.

In Example 2 of Patent document 1, calcium carbonate, barium sulfate and an aramid fiber are blended at a high content in an addition-reaction type polyimide resin. However, the filler may be distributed ununiformly in the composition after molding because the calcium carbonate has an average particle diameter as large as 20 um, the respective fillers are blended at densities different from each other, and a heat melt kneading is not conducted. In the present invention, an inorganic microparticulate filler having an average particle diameter of less than 15 um, a functional fiber and a prepolymer of an addition-reaction type polyimide resin (imide oligomer) are subjected to heat melt kneading, whereby the fillers may be distributed uniformly in the composition after compression molding and a molded article of a desired size can be obtained. Furthermore, the composition of Example 2 in Patent document 1 aims to be used for a member like a brake pad of automobile, which is used to increase proactively frictional resistance and control the machine action. On the other hand, the present invention aims at a member for reducing the slide resistance.

Therefore, an object of the present invention is to provide a composition with a high content of filler, which can be molded by compressing at low pressure and that is excellent in the sliding performance, material hardness, or dimensional accuracy even though the content of the addition-reaction type polyimide resin is considerably reduced.

Another object of the present invention is to provide a method for producing a fiber-reinforced polyimide resin molded article having excellent sliding performance, by use of the composition at low pressure.

Means for solving the problems:

The present invention provides a composition including 40 to 350 parts by weight of functional fiber and 20 to 300 parts by weight of an inorganic microparticulate filler having an average particle diameter of less than 15 $\mu$m per 100 parts by weight of an addition-reaction type polyimide resin. The inorganic microparticulate filler is at least one of calcium carbonate, talc, barium sulfate, granite and magnesium oxide.

It is preferable in the composition of the present invention that:

1. a total of 100 to 600 parts by weight of the functional fiber and the inorganic filler are contained per 100 parts by weight of the addition-reaction type polyimide resin;
2. the functional fiber includes at least one of a carbon fiber, a glass fiber, an aramid fiber and a metal fiber; and/or
3. the functional fiber is the carbon fiber having an average fiber length of 50 to 6000 um and an average fiber diameter of 5 to 20 $\mu$m.

Further, the present invention provides a method for producing a molded article including the composition. The method includes: disperse-kneading for kneading a prepolymer of the addition-reaction type polyimide resin, the functional fiber and the inorganic microparticulate filler at a temperature not lower than a melting point of the addition-reaction type polyimide resin so as to obtain a mixture; and shaping the mixture by pressing under a temperature condition of not lower than a thermosetting of the addition-reaction type polyimide resin.

It is preferable in the method for producing a molded article of the present invention that a shaping step includes compression molding.

In the Specification, the simple expression "inorganic microparticulate filler" may include "inorganic microparticulate filler having an average particle diameter of less than 15 um".

Effects of the invention:

In the composition of the present invention, 40 to 350 parts by weight of a functional fiber and further 20 to 300 parts by weight of an inorganic filler are blended per 100 parts by weight of the addition-reaction type polyimide resin. This enables to decrease the content of the addition-reaction type polyimide resin in the composition, thereby reducing the cost. Further, since the blend amount of the addition-reaction type polyimide resin is reduced, thermal expansion of the molded article can be prevented or controlled, and the dimensional accuracy can be improved. As a result, the molded article can be assembled easily with a metal member.

Since the average particle diameter of the inorganic microparticulate filler to be blended is less than 15 um, compression molding at a low pressure can be conducted without degrading the moldability, and the thus molded article can be imparted with appropriate hardness.

The molded article comprising the composition of the present invention has excellent wear resistance. Furthermore, the dynamic friction coefficient may not be increased. Therefore, the resin's melting or baking caused by the friction heat during sliding does not occur, or the molded article may not be worn excessively. Namely, the sliding performance is excellent.

Further, an inorganic microparticulate filler having Mohs hardness in a range of 0.5 to 4 is used so that the inorganic microparticulate filler in a sliding member may be ground without hurting the mating material. As a result, the functional fiber coated with the addition-reaction type polyimide resin may be transferred into the mating material, thereby improving the tribological property.

As described above, compression molding at a low pressure can be conducted in the method for producing a molded article of the present invention. Therefore, the molded article can be formed to have a thickness as designed, resulting in excellent dimensional accuracy. Furthermore, the present invention uses a composition containing a functional fiber and an inorganic microparticulate filler in an amount of 100 to 600 parts by weight in total per 100 parts by weight of the addition-reaction type polyimide resin. The functional fiber and the inorganic microparticulate filler are impregnated with the addition-reaction type polyimide resin that makes a binder for them. As a result, the resin can be crosslinked and cured with the functional fiber and the inorganic microparticulate filler uniformly dispersed therein without sedimentation or non-uniform distribution. In this manner, a preferable molded article to make a sliding member free from distortion like warpage can be produced.

Furthermore, the step of adjusting the viscosity of the composition can be omitted depending on the addition amounts of the functional fiber and the inorganic microparticulate filler. As a result, the productivity can be improved.

Brief Description of the Drawings:

[Fig. 1] : a view showing a method for measuring wear resistance (specific wear depth) for evaluation in Examples;
[Fig. 2] : a view showing a method for measuring difference (%) between the thickness of molded article and the target thickness in Examples;
[Fig. 3] : a view showing an electronic micrograph for observing a cross section of a molded article obtained in Example 1; and [Fig. 4] : a view showing an electronic micrograph for observing a cross section of a molded article obtained in Example 3.

Mode for Carrying Out the Invention:

[Composition]

The composition of the present invention contains 40 to 350 parts by weight of the functional fiber and 20 to 300 parts by weight of the inorganic microparticulate filler having an average particle diameter of less than 15 $\mu$m per 100 parts by weight of the addition-reaction type polyimide resin.

It is preferable that the total amount of the functional fiber and the inorganic microparticulate filler in the composition is 100 to 600 parts by weight, and in particular 150 to 400 parts by weight. When the total amount of the functional fiber and the inorganic microparticulate filler exceeds the range, the composition of the molded article may have voids that causes expansion of the molded article to increase the difference (%) in thickness with respect to the target thickness (designed thickness) . On the other hand, when the total amount of the functional fiber and the inorganic microparticulate filler is less than the range, the use amount of the polyimide resin may be increased in comparison with the case of the aforementioned range, which may increase the cost.

[Addition-reaction type polyimide resin]

An essential feature of the present invention is to use the addition-reaction type polyimide resin as the polyimide resin to make the matrix of a composition to constitute the fiber-reinforced polyimide molded article.

The addition-reaction type polyimide resin used in the present invention comprises an aromatic polyimide oligomer having an addition-reaction group at the end and can be prepared by a conventional method. For instance, it can be obtained easily by allowing ingredients to react preferably in a solvent. In this case, the ingredients are aromatic tetracarboxylic acid dianhydride, aromatic diamine, and a compound having in the molecule an anhydride group or an amino group together with the addition-reaction group, such that the total amount of the equivalents of each acid group and the total amount of each amino group are made approximately equal.

Examples of the reaction method includes: a method comprising two steps of generating oligomer having an acid amide bond by polymerization for 0.1 to 50 hours at a temperature not higher than 100°C or preferably not higher than 80°C, and chemically imidizing with an imidization agent; a method comprising two steps of generating oligomer by the same process and heating at a high temperature of about 140 to about 270°C for thermal imidization; or a method comprising one step of performing polymerization and imidization reaction for 0.1 to 50 hours at high temperature of 140 to 270°C from the beginning.

For the solvent to be used in the reactions, organic polar solvents can be used preferably, and the examples include N-methyl-2-pyrrolidone, N,N-dimethylformamide, N,N-dimethylacetamide, N,N-diethylacetamide, $\gamma$-butyl lactone and N-methylcaprolactam, though the present invention is not limited to these examples.

In the present invention, the addition-reaction group at the end of the aromatic imide oligomer is not particularly limited as long as the group is subjected to a curing reaction (addition-polymerization reaction) by heating at the time of producing a molded article. When considering that the curing reaction is conducted preferably and the obtained cured product has favorable heat resistance, preferably it is any reaction group selected from the group consisting of a phenylethynyl group, an acetylene group, a nadic acid group and maleimide group. The phenylethynyl group is particularly preferred since it does not generate gaseous substance by the curing reaction, and further the obtained article has excellent heat resistance and excellent mechanical strength.

The addition-reaction groups may be introduced since a compound having in its molecules an anhydride group or an amino group together with the addition-reaction group reacts with the amino group or the acid anhydride group at the end of the aromatic imide oligomer. The reaction is preferably a reaction to form an imide ring.

Examples of the compound that has an anhydride group or an amino group together with an addition-reaction group in the molecule, which can be used preferably, include: 4-(2-phenylethynyl) phthalic anhydride, 4-(2-phenylethynyl) aniline, 4-ethynyl-phthalic anhydride, 4-ethynylaniline, nadic anhydride, and maleic anhydride.

Examples of the tetracarboxylic acid component constituting the aromatic imide oligomer having at the end an addition-reaction group, which can be used preferably, include at least one tetracarboxylic dianhydride selected from the group consisting of: 2,3,3',4'-biphenyltetracarboxylic dianhydride, 2,2',3,3'-biphenyltetracarboxylic dianhydride, 3,3',4,4'-biphenyltetracarboxylic acid dianhydride, and 3,3',4,4'-benzophenonetetracarboxylic acid dianhydride. Among them, 2,3,3',4'-biphenyltetracarboxylic dianhydride can be used particularly preferably.

For the diamine component constituting the aromatic imide oligomer having an addition-reaction group at the end, the following components can be used singly or as a combination of one or more components including:

a diamine having one benzene ring, such as 1,4-diaminobenzene, 1,3-diaminobenzene, 1,2-diaminobenzene, 2,6-diethyl-1,3-diaminobenzene, 4,6-diethyl-2-methyl-1,3-diaminobenzene, 3,5-diethyltoluene-2,4-diamine, and 3,5-diethyltoluene-2,6-diamine;

a diamine having two benzene rings, such as 4,4'-diaminodiphenylether, 3,4'-diaminodiphenylether, 3,3'-diaminodiphenylether, 3,3'-diaminobenzophenone, 4,4'-diaminobenzophenone, 4,4'-diaminodiphenylmethane, 3,3'-diaminodiphenylmethane, bis(2,6-diethyl-4-aminophenoxy)methane, bis(2-ethyl-6-methyl-4-aminophenyl)methane, 4,4'-methylene-bis(2,6-diethylaniline), 4,4'-methylene-bis(2-ethyl,6-methylaniline), 2,2-bis(3-aminophenyl)propane, 2,2-bis(4-aminophenyl)propane, benzidine, 2,2'-bis(trifluoromethyl)benzidine, 3,3'-dimethylbenzidine, 2,2-bis(4-aminophenyl)propane, and 2,2-bis(3-aminophenyl)propane;

a diamine having three benzene rings, such as 1,3-bis(4-aminophenoxy)benzene, 1,3-bis(3-aminophenoxy)benzene, 1,4-bis(4-aminophenoxy)benzene, and 1,4-bis(3-aminophenoxy)benzene; and

a diamine having four benzene rings, such as 2,2-bis[4-[4-aminophenoxy]phenyl]propane, and 2,2-bis[4-[4-aminophenoxy]phenyl]hexafluoropropane, although the present invention is not limited to these examples .

It is preferable to use a mixed diamine comprising at least two aromatic diamines selected from the group consisting of 1,3-diaminobenzene, 1,3-bis(4-aminophenoxy)benzene, 3,4'-diaminodiphenyl ether, 4,4'-diaminodiphenyl ether, and 2,2'-bis(trifluoromethyl)benzidine.

From the viewpoint of heat resistance and moldability, it is particularly preferable to use a mixed diamine as a combination of 1,3-diaminobenzene and 1,3-bis(4-aminophenoxy) benzene; a mixed diamine as a combination of 3,4'-diaminodiphenyl ether and 4,4'-diaminodiphenyl ether; a mixed diamine as a combination of 3,4'-diaminodiphenyl ether and 1,3-bis(4-aminophenoxy) benzene; a mixed diamine as a combination of 4,4'-diaminodiphenylether and 1,3-bis(4-aminophenoxy)benzene; and a mixed diamine as a combination of 2,2'-bis(trifluoromethyl)benzidine and 1,3-bis(4-aminophenoxy)benzene.

In the present invention, an aromatic imide oligomer having an addition-reaction group at the end is used. It is preferable for the aromatic imide oligomer that the repeating number of the repeating unit of the imide oligomer is 0 to 20, in particular 1 to 5. It is preferable that the number average molecular weight in terms of styrene by GPC is not more than 10000, and particularly not more than 3000. When the repeating number of the repeating unit is within the range, the melting viscosity is adjusted within an appropriate range, enabling uniform mixing of the functional fiber. In addition to that, there is no need to mold at high temperature, and the present invention can provide a molded article excellent in moldability and also in heat resistance and mechanical strength.

The repeating number of the repeating unit can be adjusted by modifying the contents of the aromatic tetracarboxylic dianhydride, the aromatic diamine, and the compound having an anhydride group or an amino group together with the addition-reaction group in the molecule. By raising the content of the compound having an anhydride group or an amino group together with the addition-reaction group in the molecule, the molecular weight may be decreased such that the repeating number of the repeating unit may be decreased. When the content of the same compound is decreased, the molecular weight may be increased such that the repeating number of the repeating unit may be increased.

It is also possible to blend resin additives such as a flame retardant, a coloring agent, a lubricant, a heat stabilizer, a light stabilizer, a UV absorber and a filler in the addition-reaction type polyimide resin in accordance with known formulation to be applied to any target molded article.

[Functional fiber]

In the present invention, conventionally-known fibers can be used for the functional fiber to be dispersed in the aforementioned addition-reaction type polyimide resin, and the examples include a carbon fiber, an aramid fiber, a glass fiber and a metal fiber, among which the carbon fiber can be used particularly preferably.

Among them, a carbon fiber having an average fiber length in a range of 50 to 6000 um and an average fiber diameter in a range of 5 to 20 um can be used particularly preferably. When the average fiber length is less than the range, the carbon fiber cannot provide a sufficient effect as a reinforcing material. When the same length is more than the range, the dispersion property in the polyimide resin may deteriorate. When the average fiber diameter is less than the range, the fiber may be expensive and inferior in usability. When the average fiber diameter is more than the range, the sedimentation speed of the functional fiber may be increased to cause non-uniform distribution of the functional fiber. In addition, the strength of the fiber tends to deteriorate, and the carbon fiber cannot provide a sufficient effect as a reinforcing material.

The content of the functional fiber has a great influence on the sliding performance of the molded article and warpage during molding. As described above, 40 to 350 parts by weight, particularly 50 to 250 parts by weight of the functional fiber of the present invention is preferably contained in 100 parts by weight of the addition-reaction type polyimide in order to impart excellent sliding performance and also excellent shape stability free from warpage. When the amount of the functional fiber is less than the range, the wear resistance may deteriorate to degrade the tribological performance. In addition to that, more warpage may occur in the molded article. On the other hand, when the amount of the functional fiber exceeds the range, the wear resistance may deteriorate to degrade the sliding performance. Furthermore, the viscosity may be increased excessively to hinder shaping.

[Inorganic microparticulate filler]

It is important in the present invention that the inorganic microparticulate filler is contained together with the functional fiber as described above in an amount of 20 to 300 parts by weight, and in particular 25 to 250 parts by weight per 100 parts by weight of the addition-reaction type polyimide resin, so that the use amount of the addition-reaction type polyimide resin can be reduced without sacrificing the moldability of the composition. Here, the microparticulate filler has an average particle diameter of less than 15 um, in particular, in a range of 0.5 to 10 um. In the present invention, the average particle diameter is calculated based on the specific surface area measured by an air-permeability method using a Blaine Air permeability apparatus.

In the present invention, the inorganic microparticulate filler is at least one of calcium carbonate, talc, barium sulfate, granite and magnesium oxide. The sliding member is preferably formed of inorganic filler having Mohs hardness in a range of 0.5 to 4, and calcium carbonate can be used particularly preferably therefor.

[Others]

The composition of the present invention can contain at least one of fine carbon materials such as graphite, molybdenum disulfide and carbon black; a metal powder such as an aluminum powder and a copper powder; and PTFE, in addition to the aforementioned functional fiber and inorganic microparticulate filler. These materials can be contained in an amount of 1 to 150 parts by weight, and in particular in an amount of 2 to 100 parts by weight per 100 parts by weight of the addition-reaction type polyimide. By blending these materials within the above range, it is possible to raise the viscosity of the addition-reaction type polyimide resin to maintain the functional fiber in its dispersed state, and improve the sliding performance.

Furthermore, the thermal conductivity of the composition may be improved by blending the inorganic materials so that the composition can easily release heat generated by friction to the outside of the system when the composition is used as the sliding member.

[Method for producing molded article]

The method for producing a molded article of the present invention comprises: a disperse-kneading step (A) for kneading a prepolymer (imide oligomer) of an addition-reaction type polyimide resin, together with a functional fiber and an inorganic microparticulate filler at a temperature not lower than the melting point and not higher than the thermoset starting temperature of the addition-reaction type polyimide resin; and a shaping step (B) for press-shaping a mixture that has been subjected to the disperse-kneading step under a temperature condition of not lower than the thermoset starting temperature of the reaction type polyimide resin.

As described above, the prepolymer of the addition-reaction type polyimide resin has a low melting viscosity. In a conventional technique, a step of adjusting viscosity is conducted between the disperse-kneading step (A) and the shaping step (B) in order to prevent non-uniform distribution of the functional fiber in the prepolymer. In the composition of the present invention, the content of the addition-reaction type polyimide resin is reduced by blending the inorganic microparticulate filler. This enables to crosslink and cure the prepolymer impregnated in the functional fiber while the prepolymer being coated on the functional fiber, and thus, the viscosity adjustment step is not always required because there is little risk of non-uniform distribution of the functional fibers. Similarly, when an inorganic material like graphite having a thickening effect is added, the viscosity adjustment step may not be required.

In some cases, however, the content of the addition-reaction type polyimide resin in the composition is approximate to the upper limit defined in the present invention, or the melting viscosity of the prepolymer is extremely low. In such a case, it may be better to raise the melting viscosity of the prepolymer to a desired range in order to prevent resin leakage. For the purpose, the temperature of not lower than the thermoset starting temperature of the reaction type polyimide resin is maintained for a predetermined time during the shaping step so as to raise the viscosity of the kneaded material as required to prevent or reduce the resin leakage. Alternatively, it is possible to conduct the viscosity adjustment step between the disperse-kneading step (A) and the shaping step (B).

[Disperse-kneading step]

The prepolymer (imide oligomer) of the addition-reaction type polyimide resin, the functional fiber and the inorganic microparticulate filler are heated at a temperature not lower than the melting point of the addition-reaction type polyimide resin so as to melt and knead the prepolymer, thereby obtaining a mixture of the prepolymer (imide oligomer) of the addition-reaction type polyimide resin, the functional fiber and the inorganic microparticulate filler. For this process, 40 to 350 parts by weight, and in particular 50 to 250 parts by weight of the functional fiber and 20 to 300 parts by weight, and in particular 25 to 250 parts by weight of inorganic microparticulate filler are used per 100 parts by weight of the addition-reaction type polyimide, as described above. Further, the aforementioned amount of the aforementioned "other" materials can be blended.

Any conventionally known mixer such as Henschel mixer, tumbler mixer and ribbon blender can be used for kneading the prepolymer, the functional fiber and the inorganic microparticulate filler. Among them, a batch-type pressure kneader (dispersion mixer) is used particularly preferably, since it is important to prevent breakage of the functional fiber and disperse the fiber.

In the present invention, it is desirable to cool and solidify the mixture after the disperse-kneading step and then to form the mixture as blocks of a predetermined size. Thereby, the mixture comprising the functional fiber and the inorganic microparticulate filler dispersed in the prepolymer can be stored for a certain period of time, and the usability also can be improved.

[Shaping step]

After the disperse-kneading step or after the viscosity adjustment step (the latter may be conducted as required), the mixture is shaped under the condition of temperature not lower than the thermoset starting temperature of the polyimide resin in use, which is formed as a molded article of a desired shape.

In the viscosity adjustment step, the mixture is held in a mold for about 5 to 30 minutes at a temperature of $310\pm10°C$, which is approximate to the thermoset starting temperature of the polyimide resin in use, so as to thicken the kneaded material and to prevent or reduce the resin leakage.

It is preferable that the shaping is conducted by a compression molding method of pressing the mixture introduced into a mold, or a transfer method. Alternatively, an injection method or an extrusion method can be employed for shaping. It is also possible to employ a step of heating and holding the shaped article taken out from the mold at a desired temperature and for a desired time in an electric furnace sc as to eliminate uncured parts of the thermosetting resin in the composition and further improve the heat resistance.

Examples:

[Friction-wear test]

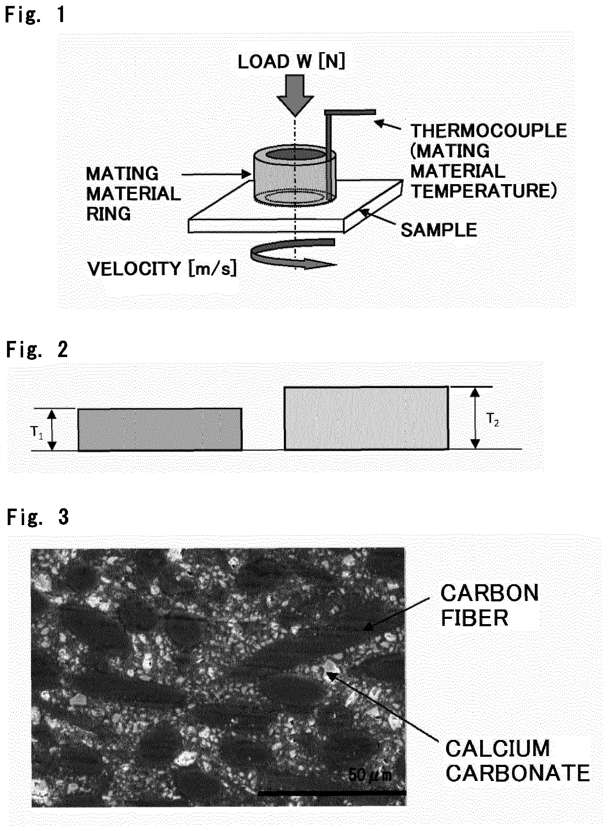

A thrust type wear tester (friction-wear tester EMF-III-F manufactured by A&D Company, Limited) complied with JIS K 7218 (Testing methods for sliding wear resistance of plastics) was used to conduct a sliding wear test in the ring-on-disc style as shown in Fig. 1 under the conditions of load (W): 300 N, velocity: 0.5 m/s, sliding distance (L): 3 km (test time: 100 minutes), and mating material: S45C (surface roughness Ra = 0.8 um). The wear depth (volume V) was measured from the groove shape of a sample by use of a 3D contour shape measuring instrument (Surfcom 2000SD3 manufactured by Tokyo Seimitsu Co., Ltd.), from which a specific wear depth $w_s$ was calculated based on the formula (1).

Acceptance (○) : $w_s \leq 0.4 \times 10^{-5}$ mm$^3$/N ▪ m

$$w_s[\text{mm}^3/\text{N·m}] \;=\; V/WL \quad \cdots(1)$$

The friction resistance (dynamic friction coefficient) generated at the mating material ring and the sample and the temperature during the sliding were measured. For measuring the sliding interface temperature, a thermocouple was embedded in the mating material and the mating material temperature in the vicinity of the sliding interface was measured to evaluate the friction heating. The dynamic friction coefficient of 0.3 or less was determined as Acceptance (○).

[Difference in thickness of molded article]

Actual thickness ($T_2$) of the molded article obtained by compression molding was measured with a caliper to calculate a difference (%) from designed thickness ($T_1$) of the molded article. Thickness difference (%) within $\pm2.5\%$ was determined as Acceptance (O) .

$$\text{Thickness difference (\%)} \;=\; (T_2-T_1)/T_1 \times 100 \quad \cdots(2)$$

[Rockwell hardness (HRE)]

Rockwell hardness was measured in accordance with JIS K 7202 using ATK-F1000 manufactured by Akashi Seisakusho, Ltd. In this method, a predetermined standard load was applied onto the sample via a steel ball, and then a test load was applied, and the standard load was again applied to calculate the hardness. The measurement was conducted based on a scale: E by using as an indenter a steel ball having a diameter of 1/8 inches, under conditions of standard load: 10 kg and test load: 100 kg. Here, the value of 70 or more was regarded as Acceptance (○).

[Fiber dispersion]

The cross section of the molded article was observed visually or with an electron scanning microscope (S-3400N manufactured by Hitachi High-Technologies) so as to check whether the fibers were distributed thereon ununiformly.

[Example 1]

75 parts by weight of pitch-based carbon fiber having an average fiber length of 200 um (K223HM manufactured by Mitsubishi Plastics, Inc.) and 75 parts by weight of super-microparticulate heavy calcium carbonate having an average particle diameter of 1.1 um (SOFTON2200 manufactured by Bihoku Funka Kogyo Co.) were blended in 100 parts by weight of addition-reaction type polyimide resin (PETI-330 manufactured by Ube Industries, Ltd.), melted and kneaded with a kneader for 30 minutes under an atmospheric pressure at 280°C so as to prepare a mixture. Then, the mixture was cooled to room temperature to obtain a bulk molding compound (hereinafter, BMC). The BMC was pulverized into a size to improve the usability, and later, it was held for a certain period of time at 320°C in a mold for a compression molding apparatus with a designed thickness of 4 mm equivalent so as to melt, soak, and adjust the viscosity. Later, the temperature was raised to 371°C at a temperature rise rate of 3°C/min while applying pressure to 2.4 MPa, at which the mixture was held for 60 minutes and slowly cooled to obtain a sheet having a diameter of 40 mm and a thickness of 4.02 mm. The sheet was processed to a desired size to obtain samples.

[Example 2]

A sheet having a diameter of 40 mm and a thickness of 3.92 mm was obtained by the method similar to that in Example 1 except that 133 parts by weight of the pitch-based carbon fiber and 100 parts by weight of super-microparticulate heavy calcium carbonate were blended in 100 parts by weight of the addition-reaction type polyimide resin.

[Example 3]

A sheet having a diameter of 40 mm and a thickness of 3.96 mm was obtained by the method similar to that in Example 1 except that 200 parts by weight of the pitch-based carbon fiber and 200 parts by weight of super-microparticulate heavy calcium carbonate were blended in 100 parts by weight of the addition-reaction type polyimide resin, and that the time for melt-kneading with the kneader was set to 10 minutes.

[Comparative Example 1]

A sheet having a diameter of 40 mm and a thickness of 3.96 mm was obtained by the method similar to that in Example 1 except that 150 parts by weight of the pitch-based carbon fiber was blended in 100 parts by weight of the addition-reaction type polyimide resin while the super-microparticulate heavy calcium carbonate was not blended.
The sample obtained in Comparative Example 1 failed to satisfy the criteria in measurements of Rockwell hardness and the specific wear depth conducted in the sliding wear test.

[Comparative Example 2]

A sheet having a diameter of 40 mm and a thickness of 5.70 mm was obtained by the method similar to that in Example 1 except that 400 parts by weight of the pitch-based carbon fiber was blended in 100 parts by weight of the addition-reaction type polyimide resin while the super-microparticulate heavy calcium carbonate was not blended, and the time of melt-kneading with a kneader was set to 10 minutes.
In the sample obtained in Comparative Example 2, the moldability was degraded considerably due to the increased content of fiber in the composition, and it caused the increase of the difference in thickness relative to the designed thickness. Further, the sample failed to satisfy the criteria in both the Rockwell hardness and the specific wear depth in the sliding wear test.

[Comparative Example 3]

A sheet having a diameter of 40 mm and a thickness of 3.93 mm was obtained by the method similar to that in Example 1 except that 400 parts by weight of the super-microparticulate heavy calcium carbonate was blended in 100 parts by weight of the addition-reaction type polyimide resin while the pitch-based carbon fiber was not blended, and the time of melt-kneading with a kneader was set to 10 minutes.
The sample obtained in Comparative Example 3 did not satisfy the criteria because both the dynamic friction coefficient and the sliding interface temperature were high in the sliding wear test, and further the specific wear depth was large.

[Comparative Example 4]

A sheet having a diameter of 40 mm and a thickness of 5.02 mm was obtained by the method similar to that in Example 1 except that 200 parts by weight of the pitch-based carbon fiber and further 200 parts by weight of a commonly-used heavy calcium carbonate as an substitute for the super-microparticulate heavy calcium carbonate were blended in 100 parts by weight of the addition-reaction type polyimide resin, and the time for melt-kneading with the kneader was set to 10 minutes. The commonly-used heavy calcium carbonate was BF400 manufactured by Bihoku Funka Kogyo Co. and it had an average particle diameter of 18.6 um.

In the sample obtained in Comparative Example 4, the average particle diameter of calcium carbonate was increased, so that the moldability was degraded, the difference in thickness relative to the designed thickness was increased, and furthermore, the Rockwell hardness failed to satisfy the criterion.

Table 1 shows measurement results for the molded articles obtained in Examples 1-3 and Comparative Examples 1-4 for the difference in thickness, Rockwell hardness, specific wear depth in sliding wear test, dynamic friction coefficient, and mating material temperature (temperature in the vicinity of the sliding interface).

[Table 1]

| | Carbon fiber part by weight | CaCO$_3$ part by weight | CaCO$_3$ particle diameter (μm) | Molded article thickness difference (%) | Rockwell hardness (HRE) | Specific wear depth (×10$^{-5}$mm$^3$/ N - m) | Dynamic friction coefficient | Mating material temperature (°C) |
|---|---|---|---|---|---|---|---|---|
| Example 1 | 75 | 75 | 1.1 | ○ +0.5 | ○ 70.92 | ○ 0.22 | ○ 0.17 | 117 |
| Example 2 | 133 | 100 | 1.1 | ○ -2.0 | ○ 82.2 | ○ 0.27 | ○ 0.21 | 129 |
| Example 3 | 200 | 200 | 1.1 | ○ -1.0 | ○ 83.52 | ○ 0.35 | ○ 0.23 | 133 |
| Comparative Example 1 | 150 | - | - | ○ -1.0 | × 63.7 | × 0.56 | ○ 0.23 | 132 |
| Comparative Example 2 | 400 | - | - | × +42.5 | × Not measurable | × 0.73 | ○ 0.22 | 122 |
| Comparative Example 3 | - | 400 | 1.1 | ○ -1.8 | ○ 94.78 | × 365 | × 0.52 | 260 |
| Comparative Example 4 | 200 | 200 | 18.6 | × +25.5 | × Not measurable | - | - | |
| Notes : Acceptance (○), Not Acceptance ( × ) | | | | | | | | |

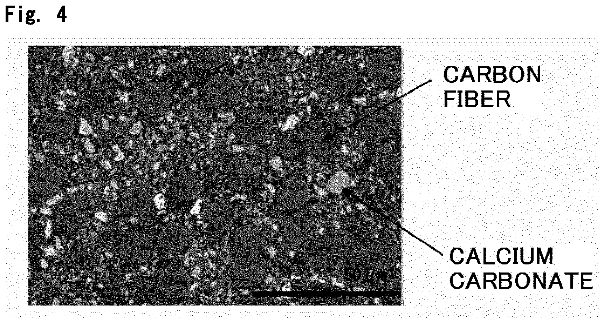

Fig. 3 is an electron micrograph taken for observation of a cross section of a molded article in Example 1, and Fig. 4 is an electron micrograph taken for observation of a cross section of a molded article in Example 3. In both of the micrographs, the carbon fiber and the microparticulate calcium carbonate uniformly dispersed in the molded articles are observed.

Industrial Applicability:

The molded article of the present invention, in which the use amount of the addition-reaction type polyimide resin is decreased considerably, is excellent in economy and capable of being compress-molded at a low pressure. And the thus obtained fiber-reinforced molded article has excellent sliding performance so as to be applied as a sliding member to various fields such as automobiles and electricity or electronics.

**Claims**

1. A composition including 40 to 350 parts by weight of a functional fiber and 20 to 300 parts by weight of an inorganic microparticulate filler having an average particle diameter of less than 15 $\mu$m per 100 parts by weight of an addition-reaction type polyimide resin,
   wherein the inorganic microparticulate filler is at least one of calcium carbonate, talc, barium sulfate, granite and magnesium oxide.

2. The composition according to claim 1, wherein a total of 100 to 600 parts by weight of the functional fiber and the inorganic filler are contained per 100 parts by weight of the addition-reaction type polyimide resin.

3. The composition according to claim 1 or 2, wherein the functional fiber includes at least one of a carbon fiber, a glass fiber, an aramid fiber and a metal fiber.

4. The composition according to any one of claims 1 to 3, wherein the functional fiber is the carbon fiber having an average fiber length of 50 to 6000 um and an average fiber diameter of 5 to 20 um.

5. A sliding member including the composition according to any one of claims 1 to 4.

6. A method for producing a molded article including the composition according to any one of claims 1 to 4, the method including:

   disperse-kneading for kneading a prepolymer of the addition-reaction type polyimide resin, the functional fiber and the inorganic microparticulate filler at a temperature not lower than a melting point of the addition-reaction type polyimide resin so as to obtain a mixture; and
   shaping the mixture by pressing under a temperature condition of not lower than a thermosetting temperature of the addition-reaction type polyimide resin.

7. The method according to claim 6, wherein a shaping includes compression molding.

**Patentansprüche**

1. Zusammensetzung, die 40 bis 350 Gewichtsteile einer funktionellen Faser und 20 bis 300 Gew.-Teile eines anorganischen Mikropartikelfüllstoffs mit einem durchschnittlichen Teilchendurchmesser von weniger als 15 pm pro 100 Gewichtsteile eines Polyimidharzes vom Additionsreaktionstyp enthält,
   wobei es sich bei dem anorganischen Mikropartikelfüllstoff um mindestens einen der Stoffe Calciumcarbonat, Talk, Bariumsulfat, Granit und Magnesiumoxid handelt.

2. Zusammensetzung nach Anspruch 1, wobei insgesamt 100 bis 600 Gewichtsteile der funktionellen Faser und des anorganischen Füllstoffs pro 100 Gewichtsteile des Polyimidharzes vom Additionsreaktionstyp enthalten sind.

3. Zusammensetzung nach Anspruch 1 oder 2, wobei die funktionelle Faser mindestens eines der Folgenden enthält: eine Kohlenstofffaser, eine Glasfaser, eine Aramidfaser und eine Metallfaser.

4. Zusammensetzung nach einem der Ansprüche 1 bis 3, wobei die funktionelle Faser eine Kohlenstofffaser ist, die eine durchschnittliche Faserlänge von 50 bis 6000 pm und einen durchschnittlichen Faserdurchmesser von 5 bis 20 pm aufweist.

5. Gleitelement, das die Zusammensetzung nach einem der Ansprüche 1 bis 4 enthält.

6. Verfahren zur Herstellung eines Formkörpers, der die Zusammensetzung nach einem der Ansprüche 1 bis 4 enthält, wobei das Verfahren folgende Schritte enthält:

Dispersionskneten zum Kneten eines Präpolymers des Polyimidharzes vom Additionsreaktionstyp, der funktionellen Faser und des anorganischen Mikropartikelfüllstoffs bei einer Temperatur, die nicht niedriger als ein Schmelzpunkt des Polyimidharzes vom Additionsreaktionstyp ist, um ein Gemisch zu erhalten; und
Formen des Gemisches durch Pressen unter einer Temperaturbedingung, die nicht niedriger ist als die Wärmehärtungstemperatur des Polyimidharzes vom AdditionsReaktionstyp.

7. Verfahren nach Anspruch 6, wobei das Formen Formpressen enthält.


**Revendications**

1. Composition, incluant de 40 à 350 parties en poids d'une fibre fonctionnelle et de 20 à 300 parties en poids d'une charge microparticulaire inorganique ayant un diamètre particulaire moyen inférieur à 15 $\mu$m par 100 parties en poids d'une résine polyimide de type réaction d'addition,
dans laquelle la charge microparticulaire inorganique est au moins un de : carbonate de calcium, talc, sulfate de baryum, granite et oxyde de magnésium.

2. Composition selon la revendication 1, dans laquelle un total de 100 à 600 parties en poids de la fibre fonctionnelle et de la charge inorganique sont contenues par 100 parties en poids de la résine polyimide de type réaction d'addition.

3. Composition selon la revendication 1 ou 2, dans laquelle la fibre fonctionnelle inclut au moins une de : une fibre de carbone, une fibre de verre, une fibre d'aramide et une fibre de métal.

4. Composition selon l'une quelconque des revendications 1 à 3, dans laquelle la fibre fonctionnelle est la fibre de carbone ayant une longueur de fibre moyenne de 50 à 6 000 $\mu$m et un diamètre de fibre moyen de 5 à 20 $\mu$m.

5. Élément coulissant, incluant la composition selon l'une quelconque des revendications 1 à 4.

6. Procédé pour produire un article moulé incluant la composition selon l'une quelconque des revendications 1 à 4, le procédé incluant :

le pétrissage dispersé pour pétrir un prépolymère de la résine polyimide de type réaction d'addition, la fibre fonctionnelle et la charge microparticulaire inorganique, à une température non inférieure à un point de fusion de la résine polyimide de type réaction d'addition, afin d'obtenir un mélange ; et
la mise en forme du mélange par pression dans une condition de température non inférieure à une température de thermodurcissement de la résine polyimide de type réaction d'addition.

7. Procédé selon la revendication 6, dans lequel une mise en forme inclut un moulage par compression.

Fig. 1

LOAD W [N]

THERMOCOUPLE
(MATING
MATERIAL
TEMPERATURE)

MATING
MATERIAL
RING

SAMPLE

VELOCITY [m/s]

Fig. 2

$T_1$

$T_2$

Fig. 3

CARBON
FIBER

CALCIUM
CARBONATE

50 μm

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009242656 A
- JP 2011127636 A
- JP 2003526704 A
- JP 2016060914 A
- JP 2016060915 A
- WO 2016039485 A1
- EP 1029893 A2
- JP 2000234055 B